# DEMANDE DE BREVET EUROPEEN

(11) **EP 4 623 684 A1**
(43) Date de publication de la demande: **01.10.2025**
(21) Numéro de dépôt: 25166220.1
(22) Date de dépôt: 26.03.2025
(51) Int. Cl.: A01M 3/00, A01M 5/02, A01M 1/20

(54) **SYSTEME DE NEUTRALISATION DE NID DE VESPIDES**

(30) Priorité: 29.03.2024 FR 2403301; 29.03.2024 FR 2403302
(71) Demandeur: Centre national de la recherche scientifique, 75016 Paris (FR); Université de Tours, 37020 Tours Cedex 1 (FR)
(72) Inventeur: BERVILLE, Laurence, 37000 Tours (FR); DARROUZET, Eric, 37250 Veigné (FR)
(74) Mandataire: Hautier IP

(57) **Abrégé**

L'invention concerne un système de neutralisation (1) d'un nid (2) d'insectes volants, par projection de vapeur comprenant un dispositif de neutralisation (30) porté par un organe de préhension (20), le dispositif de neutralisation comprenant un organe de percement (31) configuré pour percer un nid et comprenant au moins un organe de projection (310) configurée pour être alimenté en vapeur (5), et projeter le fluide dans au moins une direction, caractérisé en ce que le dispositif de neutralisation comprend une cloche (32) présentant un volume interne (320), l'organe de percement et l'organe de projection de fluide étant situés à l'intérieur du volume interne, le dispositif de neutralisation étant configuré de sorte que lorsqu'un nid est logé, en partie au moins dans la cloche, l'organe de percement et l'organe de projection puissent pénétrer dans le nid.

## Description

### DOMAINE TECHNIQUE

La présente invention concerne le domaine de la destruction des nids d'insectes volants, plus particulièrement des vespidés tels que des frelons asiatiques ou similaires. Elle concerne en particulier un système permettant la neutralisation des vespidés, de préférence des guêpes et des frelons, ainsi que la neutralisation du nid.

### ETAT DE LA TECHNIQUE

Le frelon asiatique est une des causes principales de mortalité des colonies d'abeilles en France. Il y a peu de prédateur naturel en France pour le frelon asiatique et plusieurs techniques de piégeage/élimination du frelon au pied du rucher avec des performances encore faibles et très variables sont étudiées mais aucune ne satisfait entièrement le monde scientifique. Les techniques de neutralisation utilisent généralement des pièges mécaniques, chimiques, électriques, des appâts toxiques, ou encore des protections par cage grillagée. Ces formes de lutte se situent à proximité du rucher et sur la base de capture des insectes individu par individu.

Lorsque la présence d'un nid de frelon asiatique est identifiée, ou celui d'une colonie de guêpes ou de frelons européens qui poserait un risque pour la santé des personnes, la méthode actuelle de référence utilisée pour le détruire est d'injecter un produit biocide dans le nid avec une action rapide. Toutefois, l'utilisation d'un tel produit peut avoir des effets néfastes dans la nature et présente un danger majeur entre autres pour les autres insectes, les oiseaux ainsi que pour la santé des opérateurs. Cette méthode a également un effet de pollution de l'eau et des sols. Une solution de ce type est présentée dans le document FR3030190A1 ou encore dans la demande de brevet US20050108922A1.

Une autre solution, divulguée dans un article scientifique « Characterizing thermal tolerance in the invasive yellow-legged hornet (Vespa velutina nigrithorax): the first step toward a green control method, Ruiz-Christi, I., Berville, L., Darrouzet E. (2020) », consiste à injecter de la vapeur afin d'assurer une propagation rapide de chaleur dans le nid. Le but est d'induire une hyperthermie aux insectes. En pratique, on constate que de nombreux vespidés résistent, en particulier les vespidés hors du nid au moment du traitement. L'efficacité du système n'est donc pas satisfaisante. Du fait de cette trop faible efficacité, les professionnels du secteur se sont détournés de cette solution. En effet le dispositif ne présente pas une puissance suffisante et présente un encombrement important.

Un objet de la présente invention est donc de proposer une solution permettant de limiter, voire de supprimer, au moins certains des inconvénients présentés par les solutions de l'art antérieur.

Un autre objet de la présente invention est de proposer une solution pour neutraliser efficacement et rapidement un nid de vespidés tout en réduisant l'impact environnemental.

Les autres objets, caractéristiques et avantages de la présente invention apparaîtront à l'examen de la description suivante et des dessins d'accompagnement. Il est entendu que d'autres avantages peuvent être incorporés.

### RESUME

Pour atteindre cet objectif, selon un premier aspect on prévoit un système de neutralisation d'un nid d'insectes volants, typiquement des vespidés, préférentiellement les guêpes et/ou les frelons, par projection de vapeur comprenant un dispositif de neutralisation destiné à être porté par un organe de préhension, tel qu'une perche, manipulable par un opérateur, le dispositif de neutralisation comprenant un organe de percement configuré pour percer un nid et comprenant au moins un organe de projection configuré pour être alimenté en fluide sous pression, de préférence être alimenté en vapeur, et projeter le fluide dans au moins une direction voire dans tout le volume de la structure du nid.

Le dispositif de neutralisation comprend une cloche présentant un volume interne, l'organe de percement et l'organe de projection de vapeur étant situés à l'intérieur du volume interne. Le dispositif de neutralisation est configuré de sorte que lorsqu'un nid est logé, en partie au moins dans la cloche, l'organe de percement et l'organe de projection puissent pénétrer dans le nid.

Ainsi, l'invention propose une solution afin de neutraliser efficacement un nid de vespidés. La cloche permet d'englober le nid, de préférence entièrement, ainsi que tous les vespidés pouvant sortir de celui-ci lors de la neutralisation.

L'invention permet ainsi d'apporter de la chaleur à travers d'eau chaude sous pression, ou de vapeur aux vespidés dans le nid et à ceux qui s'en échappent. De préférence le système est configuré de sorte que lors de la projection du fluide, l'organe de projection est entièrement logé dans le volume interne de la cloche.

L'idée sous-jacente est donc une méthode permettant d'appliquer de la chaleur aux vespidés, à la fois à l'intérieur du nid et à ceux qui peuvent sortir de celui-ci. Cette application de chaleur peut être réalisée soit par l'utilisation d'eau chaude sous pression, soit par la projection de vapeur. L'objectif est de neutraliser efficacement les vespidés en exposant l'ensemble du nid ainsi que les insectes qui pourraient s'en échapper à une source de chaleur.

Dans le cadre du développement de la présente invention, il était constaté qu'en l'absence de la cloche, que bien souvent quelques vespidés s'échappent hors du nid lors du percement et de l'injection de vapeur à l'intérieur du nid Il a également été remarqué que les quelques vespidés échappés peuvent revenir à proximité du nid plusieurs heures après l'injection de vapeur à l'intérieur du nid. Ces vespidés échappés peuvent adopter un comportement agressif et dangereux pour les personnes situées dans le voisinage du nid.

L'invention offre également, grâce à l'utilisation de la cloche, une augmentation plus efficace de la température, entraînant une meilleure efficacité dans la neutralisation des vespidés. Ce système se distingue par son efficacité tout en étant léger, maniable et, par conséquent, à un coût limité.

Enfin, l'injection de vapeur permet d'éviter l'utilisation de produit dangereux que ce soit pour l'environnement ou pour les opérateurs.

Un autre aspect concerne un procédé de neutralisation d'un nid de vespidés utilisant un système tel que décrit ci-dessus. Le procédé comprend au moins une première phase comprenant les étapes suivantes :
- mise en position du dispositif de neutralisation de sorte à loger au moins partiellement et de préférence entièrement le nid dans le volume interne de la cloche, et tout en conservant le nid au moins partiellement logé dans le volume interne de la cloche,
- perçage du nid par l'organe de percement,
- au moins une injection de fluide, par exemple de la vapeur à l'intérieur du volume interne de la cloche et dans le nid par l'au moins un organe de projection.

Ainsi, l'utilisation du système est simple et rapide pour tout opérateur. Un nombre limité d'étapes est nécessaire pour accomplir la neutralisation d'un nid de vespidés de manière efficace et prompte.

### BREVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :
La figure 1 représente, de manière schématique, un système selon un premier mode de réalisation.
La figure 2 représente, de manière schématique, un système selon un autre mode de réalisation.
La figure 3 représente une vue arrière du dispositif de neutralisation selon un mode de réalisation de l'invention.
La figure 4 est un schéma représentant une vue en perspective du dispositif de neutralisation selon un mode de réalisation de l'invention.
La figure 5 est un schéma représentant une vue de profil du dispositif positionné contre un support et perçant un nid selon un mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

### DESCRIPTION DÉTAILLÉE

Avant d'entamer une revue détaillée de modes de réalisation de l'invention, sont énoncées ci-après des caractéristiques optionnelles qui peuvent éventuellement être utilisées en association ou alternativement.

Selon un exemple, le système de neutralisation comprend un générateur configuré de sorte à produire ledit fluide sous pression, de préférence un gaz chaud, de préférence de la vapeur, de préférence de la vapeur d'eau. Il peut également s'agir d'eau chaude liquide. Le système est configuré de sorte à alimenter l'au moins un organe de projection avec ledit fluide sous pression.

Selon un exemple, la cloche est configurée de sorte à englober au moins partiellement et de préférence entièrement le nid. Ainsi, la cloche peut être configurée de sorte à loger entièrement le nid.

Selon un exemple, le système est configuré de sorte que lors de la projection du fluide, l'organe de percement est entièrement logé dans le volume interne de la cloche.

Le système est configuré de sorte à maintenir l'organe de percement et/ou l'organe de projection à l'intérieur du volume interne de la cloche, y compris lors de la pénétration de l'organe de percement dans le nid et lors de la projection du fluide.

Le système est configuré de sorte à éviter que l'organe de percement et/ou l'organe de projection n'aille au-delà du volume interne de la cloche.

Le système comprend un organe, tel qu'une butée, configuré pour empêcher ou limiter le déplacement relatif de l'organe de percement et/ou de l'organe de projection par rapport à la cloche, de sorte à maintenir l'organe de percement et/ou l'organe de projection à l'intérieur du volume interne de la cloche.

Ainsi, cela permet de positionner le nid dans un environnement fermé, de préférence hermétique au passage des vespidés, afin d'avoir une efficacité satisfaisante.

Selon un exemple, le dispositif de neutralisation comprend une embase configurée pour être solidaire de l'organe de préhension, la cloche étant articulée en rotation sur l'embase selon au moins un axe de rotation, de sorte à pouvoir incliner la cloche selon au moins une direction d'inclinaison.

Dans un exemple donné, le dispositif de neutralisation est constitué d'une embase conçue pour être fixée à l'organe de préhension. La cloche, quant à elle, est articulée en rotation sur l'embase, le long d'au moins un axe de rotation, permettant ainsi d'incliner la cloche dans au moins une direction d'inclinaison.

Cela permet d'orienter la cloche et d'atteindre des angles difficiles d'accès. Le traitement du nid en est facilité et rendu plus efficace.

Selon un exemple, l'organe de percement est articulé en rotation sur l'embase selon au moins l'axe de rotation, de sorte à pouvoir incliner l'organe de percement selon au moins une direction d'inclinaison.

Cela permet d'orienter l'organe de percement et d'atteindre des angles difficiles d'accès. Le traitement du nid en est facilité et rendu plus efficace.

Selon un exemple, la cloche et l'organe de percement sont solidaires en rotation autour dudit axe de rotation, de sorte à pouvoir incliner la cloche et l'organe de percement selon une première direction d'inclinaison.

Cela permet de s'assurer automatiquement d'un correct positionnement de l'organe de percement en contrôlant le positionnement de la cloche par rapport au nid. Le percement du nid en est facilité.

Selon un exemple, au moins l'un parmi la cloche et l'organe de percement est articulé en rotation sur l'embase selon au moins un axe additionnel de rotation, de sorte à pouvoir incliner la cloche selon au moins une deuxième direction d'inclinaison.

Cela permet de s'assurer que la cloche et/ou l'organe de percement soit correctement positionné et puisse atteindre des angles difficiles d'accès. Le traitement du nid est alors facilité et rendu plus efficace.

Selon un exemple, l'organe de percement s'étend selon une direction principale dite direction principale de percement et la direction d'inclinaison principale est sensiblement perpendiculaire à la direction principale de percement.

Cela permet de s'assurer que la direction de percement soit satisfaisante et ainsi faciliter le percement du nid et donc la neutralisation des vespidés.

Selon un exemple, l'organe de projection est configuré pour projeter la vapeur selon une direction principale de projection et la direction principale de projection est sensiblement perpendiculaire à la direction principale de percement.

Cela permet une bonne diffusion de la vapeur dans la cloche et permet une bonne efficacité du dispositif de neutralisation.

Selon un exemple, l'organe de percement comprend plusieurs organes de projection positionnés espacés sur la longueur de l'organe de percement.

Cela permet ainsi de diffuser de la vapeur à la fois dans le nid après percement de celui-ci et à la fois dans la cloche, ainsi l'efficacité du dispositif est améliorée.

Selon un exemple, la cloche présente une ouverture de passage destinée à permettre le passage du nid et un fond, l'organe de percement étant situé dans le fond, de préférence au droit de ladite ouverture de passage.

Cela permet d'assurer que le dispositif est mis en place facilement et correctement pour assurer une efficacité optimale de neutralisation.

Selon un exemple, la cloche présente des parois entièrement fermées à l'exception de ladite ouverture de passage.

Cela permet d'avoir un dispositif évitant au maximum que des vespidés s'échappant du nid s'échappe du dispositif de neutralisation.

Selon un exemple, l'ouverture de passage définit un pourtour configuré de sorte à s'appliquer sur une surface pour obturer l'ouverture de passage.

Cela permet, après mise en place du dispositif, d'avoir le nid dans un environnement relativement fermé et hermétique au passage des vespidés. Tout du moins cela permet de s'assurer qu'aucuns vespidés piégés dans le dispositif de neutralisation puisse s'en échapper et donc permettre une neutralisation efficace.

Selon un exemple, la cloche est configurée pour, au moins au niveau du pourtour, être déformable, de préférence élastiquement, de préférence de sorte à pouvoir s'adapter à la forme d'un support sur lequel le nid est positionné.

Cela permet de s'adapter au support, prévenant ainsi toute évasion de vespidé, ce qui améliore l'efficacité du dispositif et, par conséquent, du système.

Selon un exemple, la cloche est en un matériau déformable élastiquement.

Cela permet d'avoir une cloche qui s'adapte même sur une surface non plane.

Selon un exemple, le système de neutralisation ne comprend pas d'organe gonflable.

Selon un exemple, la cloche n'est pas gonflable.

Selon un exemple, la cloche comprend des baleines. Cela permet une déformation simplifiée de la cloche de sorte à permettre une meilleure efficacité du système.

Selon un exemple, le dispositif de neutralisation n'est pas configuré pour détacher le nid d'un support.

Selon un exemple, le dispositif de neutralisation est configuré de sorte à ce que au moins l'un parmi la cloche et l'organe de percement est monté de manière amovible sur l'embase.

Cela permet de modifier la cloche et l'organe de percement en fonction du nid afin de s'y adapter et donc de permettre de neutraliser efficacement les vespidés.

Selon un exemple, le système comprenant une embase configurée pour être solidaire de l'organe de préhension, la cloche étant articulée en rotation sur l'embase selon au moins un axe de rotation, de sorte à pouvoir incliner la cloche selon au moins une direction d'inclinaison et dans lequel l'embase est configurée pour être montée de manière amovible sur l'organe de préhension.

Cela permet de modifier l'organe de préhension afin d'atteindre toutes les hauteurs possibles. Le traitement du nid en est facilité et rendu plus efficace.

Selon un exemple, le système comprend au moins un organe de préhension. De préférence, le système comprend un jeu d'organe de préhension de longueurs différentes.

Cela permet de modifier l'organe de préhension afin d'atteindre toutes les hauteurs possibles. Le traitement du nid en est facilité et rendu plus efficace.

Selon un exemple, l'embase et solidaire de l'organe de préhension et forme avec l'organe de préhension une pièce monobloc.

Selon un exemple, l'organe de préhension est une perche, par exemple une perche télescopique.

Cela permet d'utiliser le dispositif de neutralisation a des distances plus importante et réglable. Le traitement du nid en est facilité et rendu plus efficace.

Selon un exemple, le système comprenant un générateur configuré de sorte à produire ledit fluide sous pression, de préférence de la vapeur, pour alimenter l'au moins un organe de projection avec ledit fluide sous pression et dans lequel le générateur comprend un réservoir et une chaudière positionnés de façon déportée, le générateur étant relié à l'organe de projection par l'intermédiaire d'un conduit flexible de sorte à approvisionner en fluide sous pression l'organe de projection.

Cela permet d'avoir un système plus léger et maniable par un utilisateur et ainsi faciliter le traitement d'un nid.

Selon un exemple, la cloche présente un volume interne compris entre 5L et 70 L. De préférence, la cloche présente un volume interne compris entre 40L et 60L.

Cela permet d'intégrer la totalité du nid dans le volume interne de la cloche afin de s'assurer qu'aucuns vespidés ne s'échappent et d'avoir un système efficace.

Selon un exemple, le système comprend un jeu de cloches présentant des volumes internes différents.

Cela permet d'adapter la cloche à toute taille de nid possible et donc d'assurer qu'en position le nid soit englobé dans le volume interne de la cloche. Le jeu de cloches permet d'assurer l'efficacité du dispositif de neutralisation.

Selon un exemple, le jeu de cloches comprend au moins une première cloche présentant un volume interne V1 et une deuxième cloche présentant un volume interne V2 tel que V2 > V1.

Selon un exemple, le procédé ne comprend pas d'étape de saisie du nid.

Cela permet de ne pas bouger le nid lors de l'intervention et ainsi éviter une agressivité supplémentaire des vespidés. Le traitement et donc l'utilisation du système est donc plus efficace.

Selon un exemple, il est réalisé lors de l'au moins une première phase au moins plusieurs injections de fluide, par exemple de vapeur, dans le nid par l'au moins un organe de projection.

Cela permet de s'assurer que les vespidés piégés dans le dispositif de neutralisation sont bien neutralisés.

Selon un exemple, il est réalisé une étape d'enlèvement de la cloche après la première phase.

Selon un exemple, le procédé comprend une deuxième phase identique à la première phase. Cela permet ainsi de traiter les vespidés qui auraient pu être éloignés du nid lors de la première phase.

Selon un exemple, le procédé comprend un nettoyage de la cloche après l'étape d'enlèvement de la cloche et avant une réalisation d'au moins une deuxième phase comprenant les mêmes étapes que l'au moins une première phase.

Selon un exemple, au moins les étapes de la première phase sont effectuées alors que le nid est laissé en place par rapport à une base du nid.

Ainsi, le procédé ne comprend pas d'étape de désolidarisation, par arrachage ou par découpe par exemple, du nid par rapport à son support de fixation.

Dans la suite de la description, le terme « sur » ne signifie pas nécessairement « directement sur ». Ainsi, lorsque l'on indique qu'une pièce ou qu'un organe A est en appui « sur » une pièce ou un organe B, cela ne signifie pas que les pièces ou organes A et B soient nécessairement en contact direct avec l'autre. Ces pièces ou organes A et B peuvent être soit en contact direct soit être en appui l'une sur l'autre par l'intermédiaire d'une ou plusieurs autres pièces. Il en est de même pour d'autres expressions telle que par exemple l'expression « A agit sur B » qui peut signifier « A agit directement sur B » ou « A agit sur B par l'intermédiaire d'une ou plusieurs autres pièces ».

Le terme « solidaire » utilisé pour qualifier la liaison entre deux pièces signifie que les deux pièces sont liées/fixées l'une par rapport à l'autre, selon tous les degrés de liberté, sauf s'il est explicitement spécifié différemment. Par exemple, s'il est indiqué que deux pièces sont solidaires en translation selon une direction X, cela signifie que les pièces peuvent être mobiles l'une par rapport à l'autre, possiblement selon plusieurs degrés de liberté, à l'exclusion de la liberté en translation selon la direction X. Autrement dit, si on déplace une pièce selon la direction X, l'autre pièce effectue le même déplacement.

Dans le présent document, lorsque l'on indique que deux pièces sont distinctes, cela signifie que ces pièces sont séparées. Elles sont :
- positionnées à distance l'une de l'autre, et/ou
- mobiles l'une par rapport à l'autre et/ou
- solidaires l'une de l'autre en étant fixées par des éléments rapportés, cette fixation étant démontable ou non.

Une pièce unitaire monobloc ne peut donc pas être constituée de deux pièces distinctes.

Les termes « sensiblement », « environ », « de l'ordre de » signifient « à 20% près, de préférence à 10% près » ou, lorsqu'il s'agit d'une orientation angulaire, « à 10° près ». Ainsi, une longueur sensiblement égale à une dimension signifie qu'une longueur présentent une dimension de 5±0,5 mm.

La présente innovation concerne un système de neutralisation 1 d'un nid 2 d'insectes volants, typiquement des vespidés, préférentiellement les guêpes et/ou les frelons, par projection de vapeur. Dans la présente description une projection de vapeur s'entend comme la projection d'eau chaude sous pression avec une pression supérieure à la pression ambiante. Ce système de neutralisation 1 permet de chauffer un nid 2 de sorte à efficacement neutraliser la colonie du nid 2 de vespidés. La neutralisation étant réalisée efficacement, elle permet une utilisation rapide du système 1 tout en étant fiable.

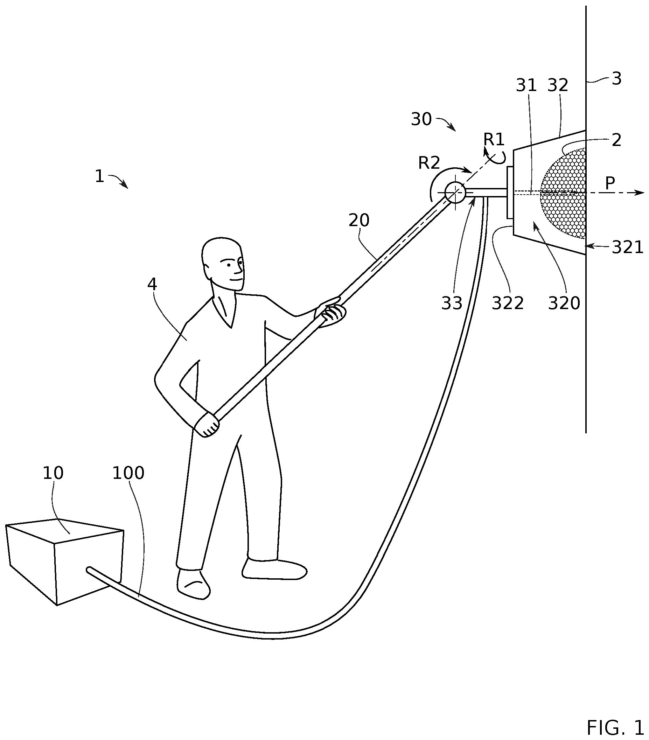

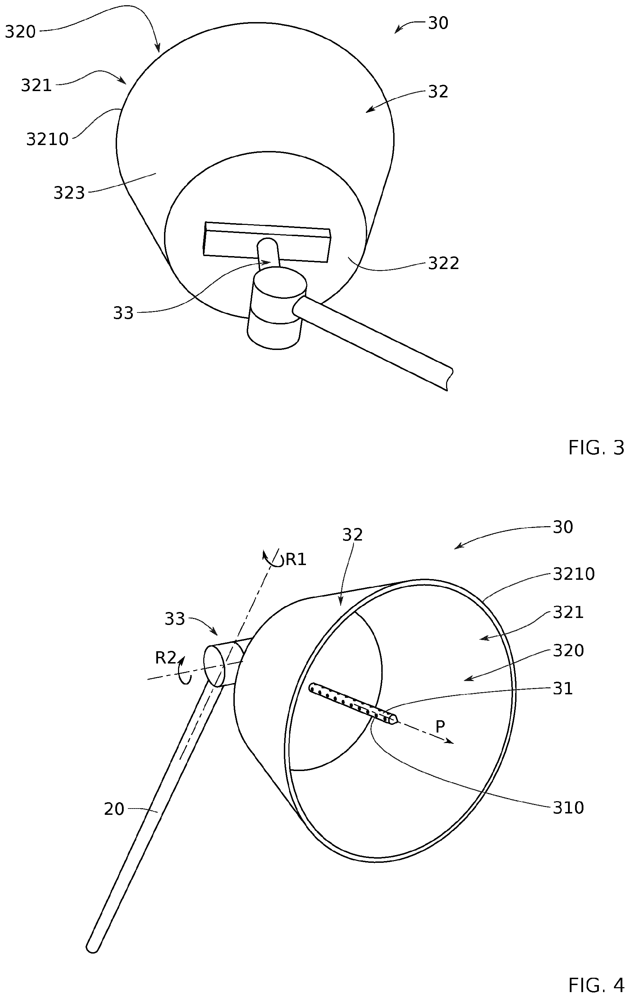

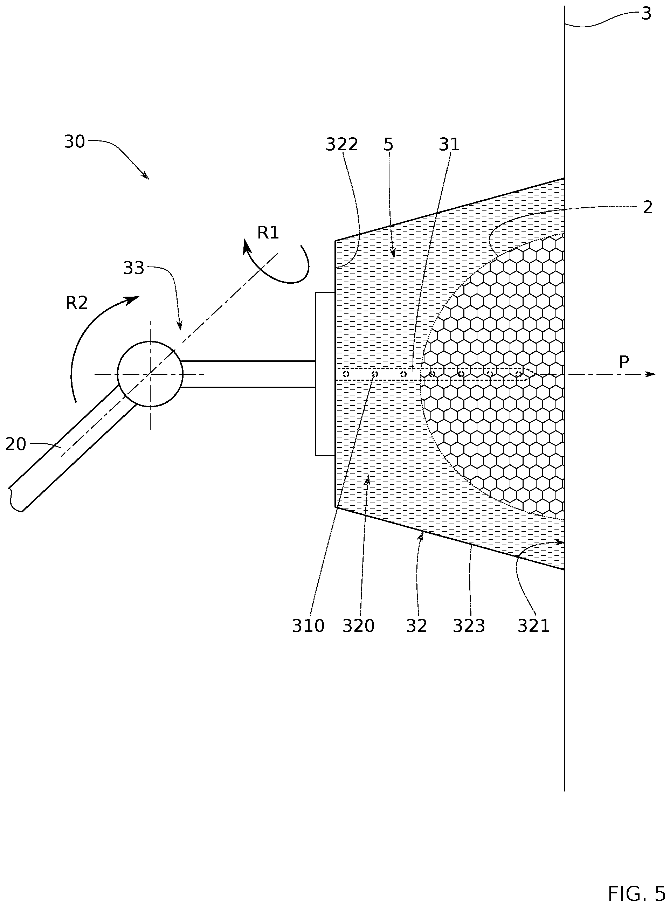

Le système de neutralisation 1 va maintenant être décrit en référence aux figures 1 à 5.

D'une manière générale, le système de neutralisation 1 comprend un dispositif de neutralisation 30 comprenant une cloche destinée à recevoir dans son volume interne le nid de vespidés. Il comprend également un organe de percement 31 destiné à pénétrer dans le nid de vespidés afin d'injecter de la vapeur à l'intérieur du nid. Le système est connecté à un générateur 10 de vapeur pour alimenter en vapeur l'organe de percement 31. Ces différents éléments vont être détaillés ci-dessous.

Le générateur 10 est configuré de sorte à produire de l'eau chaude sous pression, de préférence de la vapeur. Il peut ainsi permettre la production de vapeur nécessaire à la neutralisation des vespidés.

Le générateur 10 peut alors être relié à un organe de projection de vapeur, par exemple porté par l'organe de percement 31, par l'intermédiaire d'un conduit flexible 100 de sorte à approvisionner en eau chaude sous pression cet organe de projection de vapeur.

Selon un exemple, le générateur 10 comprend un réservoir et une chaudière positionnés de façon déportée. Le système de neutralisation 1 est alors plus léger et maniable par un opérateur 4 et ainsi faciliter le traitement d'un nid 2.

Selon un exemple, la pression en sortie du générateur de pression, que le fluide soit de la vapeur ou de l'eau liquide, est supérieure à 5 bars. De préférence, cette pression est supérieure à 9 bars. La pression en sortie du générateur de pression peut être réglée. De préférence, la pression est réglée en fonction de la taille du nid 2. Ainsi, plus le nid 2 présente un volume important plus la pression en sortie du générateur sera importante.

Le dispositif de neutralisation 30 est destiné à être porté par un organe de préhension 20. L'organe de préhension 20 étant destiné à être manipulé par un opérateur 4.

Le dispositif de neutralisation 30 comprend un organe de percement 31. L'organe de percement est configuré pour percer un nid 2. Ainsi l'organe de percement 31 peut présenter, selon un exemple, une forme de pointe en une extrémité, de sorte à pénétrer facilement dans le nid 2.

L'organe de percement 31 comprend au moins un organe de projection 310. L'organe de projection 310 est configuré pour projeter de l'eau chaude sous pression, de préférence de la vapeur 5 dans au moins une direction. L'organe de projection 310 peut comprendre ou être formé d'une buse.

De préférence, l'organe de percement 31 comprend plusieurs organes de projection 310. Par exemple, ces différents organes de projection 310 sont répartis selon une direction longitudinale de l'organe de percement 31. Ainsi, si l'organe de percement 31 présente une dimension principale, dite direction principale de percement, selon sa direction longitudinale, alors, les différents organes de percement peuvent être répartis, de manière périodique ou non périodique le long de cette direction longitudinale. De manière combinée ou alternative, les organes de projection 310 peuvent être répartis de manière concentrique autour de l'organe de percement 31. Par exemple, plusieurs organes de projection 310 peuvent être répartis autour d'un axe passant par la direction longitudinale. Cela permet d'avoir une projection de vapeur dans plusieurs directions afin de diffuser la vapeur dans tout le volume du nid.

Le dispositif de neutralisation 30 comprend également une cloche 32. La cloche 32 présente un volume interne 320. A l'intérieur du volume interne 320 sont situés l'organe de percement 31 et donc l'organe de projection 310 de vapeur 5. Ainsi, lorsqu'un nid 2 est logé, en partie au moins dans la cloche 32, l'organe de percement 31 et l'au moins un organe de projection 310 peuvent pénétrer dans le nid 2.

Selon un exemple, illustré aux figures 1, 2 et 5 la cloche 32 est configurée de sorte à englober au moins partiellement et de préférence entièrement le nid 2. Sur cet exemple la cloche est configurée pour loger entièrement le nid 2. Le nid 2 est ainsi positionné dans un environnement fermé. De préférence, il est positionné dans un environnement suffisamment hermétique pour empêcher le passage des vespidés en dehors du volume interne de la cloche 32. La cloche 32 n'a en revanche pas besoin de présenter avec le support une herméticité parfaite. La coopération de la cloche 32 et du support peut laisser passer une partie de la vapeur ou de l'eau projetée par le système. On peut également prévoir quelques orifices dans la cloche 32, dont la section ne permet pas le passage des vespidés, afin d'éviter une trop forte montée en pression à l'intérieur du volume de la cloche et la création d'un courant localisé de fluide entre l'intérieur et l'extérieur, qui entrainerait l'expulsion de vespidés hors de la cloche 32.

Le système est configuré de sorte que lors de la projection du fluide, l'organe de projection 310 est entièrement logé dans le volume interne de la cloche 32. Ainsi, tout le fluide projeté est cantonné dans le volume défini par le volume interne de la cloche 32 et le support. Le fluide ne se disperse pas au-delà du volume interne de la cloche 32, ce qui pourrait endommager les éléments, la flore ou les insectes situés en dehors du volume interne de la cloche 32. De préférence, la cloche 32 et le support forment ensemble un volume fermé.

Le système est configuré de sorte que lors de la projection du fluide, l'organe de percement 31 est entièrement logé dans le volume interne de la cloche 32. Ainsi le système est configuré pour éviter que l'organe de percement 31 n'aille au-delà du volume interne de la cloche 32. Pour cela on peut prévoir que le système comprenne un organe, tel qu'une butée, configuré pour empêcher ou pour limiter le coulissement relatif de l'organe de percement 31 par rapport à la cloche de sorte à maintenir l'organe de percement 31 à l'intérieur du volume interne de la cloche 32. Cet organe est configuré de sorte à éviter que l'organe de percement 31 et/ou l'organe de projection 310 n'aille au-delà du volume interne de la cloche 32. Ainsi on évite les risques de percement ou d'endommagement d'éléments situés en dehors du volume interne de la cloche 32.

La cloche 32 sera décrite plus en détail par la suite.

Selon un exemple, le dispositif de neutralisation 30 comprend une embase 33. L'embase 33 configurée pour être solidaire de l'organe de préhension 20. L'embase 33 peut selon un exemple comprendre plusieurs pièces distinctes. L'embase 33 peut également être une pièce monobloc. L'embase 33 permet ainsi de relier le dispositif de neutralisation 30 à l'organe de préhension 20.

Selon un exemple, la cloche 32 est articulée en rotation sur l'embase 33 selon au moins un axe de rotation R1. La cloche 32 peut ainsi grâce à l'axe de rotation R1 s'incliner selon au moins une direction d'inclinaison. La cloche 32 est ainsi orientable afin d'atteindre des nids 2 positionnés suivant des angles difficiles d'accès. Il est évident de la description précédente que, pour des insectes volants, tel des vespidés, un nid 2 est positionné de préférence en hauteur. Ainsi, le nid 2 n'est pas posé au sol ou enterré dans le sol. Un nid 2 peut être positionné sur l'un parmi une paroi, une branche d'arbre, sous un toit d'un bâtiment ou tout autre support en hauteur. Ainsi, le système de neutralisation 1 peut atteindre des zones en hauteur et difficiles d'accès.

Selon un exemple, l'organe de percement 31 est articulé en rotation sur l'embase 33 selon au moins l'axe de rotation R1. L'organe de percement 31 peut ainsi s'incliner selon au moins une direction d'inclinaison.

L'orientation réglable de l'organe de percement 31 permet ainsi d'atteindre des angles difficiles d'accès. Le traitement du nid 2 en est facilité et rendu plus efficace.

Selon un exemple, la cloche 32 et l'organe de percement 31 sont solidaires en rotation autour dudit axe de rotation R1. Ainsi, l'organe de percement 31 et la cloche 32 sont positionnés de sorte à assurer un bon positionnement du dispositif de neutralisation 30 et ainsi assurer une bonne efficacité du système de neutralisation 1. Ainsi, la cloche 32 et l'organe de percement 31 peuvent s'incliner selon une première direction d'inclinaison.

Selon un exemple, au moins l'un parmi la cloche 32 et l'organe de percement 31 est articulé en rotation sur l'embase 33 selon au moins un axe additionnel de rotation R2. De préférence la cloche 32 et l'organe de percement 31 sont articulés en rotation sur l'embrase 33 selon au moins un axe additionnel de rotation R2. Ainsi, au moins l'un parmi la cloche 32 et l'organe de percement 31 peut s'incliner selon au moins une deuxième direction d'inclinaison. La cloche 32 et l'organe de percement 31 peuvent ainsi présenter des degrés de liberté suivant au moins deux directions permettant d'atteindre des positions difficiles d'accès. Le traitement du nid est alors facilité et rendu plus efficace.

### La cloche 32 :

Selon un exemple, la cloche 32 présente une ouverture de passage 321 destinée à permettre le passage du nid 2. L'ouverture de passage 321 permet ainsi l'insertion du nid 2 dans le volume interne 320 de la cloche 32. De préférence l'ouverture de passage 321 n'est pas en contact avec le nid 2. La totalité du nid 2 peut alors être intégrée dans le volume interne 320 de la cloche 32 afin de s'assurer qu'aucuns vespidés ne s'échappent et d'avoir un système 1 efficace.

Selon un exemple, la cloche 32 présente un volume interne compris entre 5L et 70L. De préférence, le cloche 32 présente un volume compris entre 40L et 60L.

Selon un exemple, l'ouverture de passage 321 définit un pourtour 3210. Le pourtour 3210 est configuré de sorte à s'appliquer sur une surface 3 pour sensiblement obturer l'ouverture de passage 321. Le pourtour 3210 peut alors être au moins en partie, de préférence totalement, en contact avec la surface 3. Le nid 2 peut alors être logé dans un environnement relativement fermé et de préférence hermétique. Tout du moins cela permet de s'assurer qu'aucuns vespidés piégés dans le dispositif de neutralisation puisse s'en échapper et donc permettre une neutralisation efficace.

Selon un exemple, la cloche 32 est configurée pour, au moins au niveau du pourtour 3210, être déformable. De préférence, le pourtour 3210 est déformable de sorte à pouvoir s'adapter à la forme d'un support 3 sur lequel le nid 2 est positionné. L'adaptation au support 3 du pourtour 3210 et donc de la cloche 32 permet d'éviter qu'un vespidé ne s'échappe, améliorant par extension l'efficacité du dispositif 30 et donc du système 1. Le caractère déformable du pourtour 3210 et de préférence de l'ensemble de la cloche 32, permet de simplifier encore le bon piégeage du nid 2 dans la cloche et idéalement une bonne herméticité de ce piégeage. On qualifiera de piégeage hermétique, une coopération du pourtour 3210 sur le support qui définisse entre ces éléments une interface ne présentant pas d'orifice dont la dimension maximale est supérieure à Do. De préférence Do est ≤ 2 centimètres. De préférence Do est ≤ 1 centimètres. De préférence Do est ≤ 0.5 centimètres. Ainsi, on limite, voire en empêche, le risque que des vespidés s'échappent par cet orifice. Naturellement, si le support présente de fortes irrégularités, comme par exemple un mur de pierre présentant de forts reliefs, alors localement il peut se former des orifices dont la dimension est supérieure à Do.

Selon un exemple, la surface, autrement appelé support dans la présente description 3 peut être prise parmi un mur, un plafond, une surface plane ou une surface présentant des irrégularités. Le support 3 peut également être une branche d'arbre ou tout élément naturel sur lequel un nid de vespidés pourrait se positionner. Le support 3 peut alors être positionné en hauteur et ne présente pas un accès facilité à celui-ci par un opérateur. Ainsi, le dispositif 30 peut se positionner contre une grande partie des supports 3 sur lesquels les nids 2 peuvent être positionnés.

Selon un exemple la cloche comprend également un fond 322. Le fond 322 peut être destiné à accueillir l'organe de percement 31 sur une première face. Une deuxième face du fond 322, opposée à la première face peut être en contact de l'embase 33.

Selon un exemple, la cloche 32 présente des parois 323 entièrement fermées à l'exception de ladite ouverture de passage 321. Ainsi, le dispositif de neutralisation 30 permet d'éviter qu'un maximum de vespidés s'échappant du nid 2 de s'échapper du dispositif de neutralisation 30.

Selon un exemple, la cloche 32 est déformable élastiquement. Elle est configurée pour :
- se déformer sous un effort de l'utilisateur, typiquement lorsque ce dernier plaque la cloche 32 contre le support ;
- revenir à sa position en l'absence de toute sollicitation.

Selon un exemple, la cloche 32 est en un matériau déformable élastiquement.

La cloche 32 peut s'adapter même sur une surface non plane.

De manière alternative la cloche 32 peut présenter une structure rigide. La cloche 32 peut alors présenter des baleines permettant une déformation du pourtour 3210 tout en gardant une certaine rigidité. La cloche 32 est ainsi renforcée et est manipulable facilement par un opérateur 4. Ainsi, la cloche 32 n'est pas gonflable et le système de neutralisation 1 ne comprend pas d'organe gonflable.

### L'organe de percement 31 :

Selon un exemple, l'organe de percement 31 est situé dans le fond 322 de la cloche 32. De préférence l'organe de percement 31 est positionné au droit de l'ouverture de passage 321. Cela permet d'assurer que le dispositif est mis en place facilement et correctement pour assurer une efficacité optimale de neutralisation.

Selon un exemple, l'organe de percement 31 s'étend selon une direction principale dite direction principale de percement P. L'organe de percement 31 peut s'étendre ainsi longitudinalement sur une longueur L. La direction d'inclinaison principale de l'organe de percement 31 peut ainsi être sensiblement perpendiculaire à la direction principale de percement P. Ainsi, l'organe de percement 31 peut être positionné de sorte à percer le nid 2 selon la direction principale de percement P. Le percement du nid 2 étant préférentiellement réalisé sensiblement perpendiculairement par rapport à la direction d'inclinaison principale de sorte à s'assurer que la direction de percement soit satisfaisante et ainsi faciliter le percement du nid 2 et donc la neutralisation des vespidés.

Selon un exemple, l'organe de projection 310 positionné sur l'organe de percement 31 est configuré pour projeter la vapeur 5 selon une direction principale de projection. La direction principale de projection peut alors être sensiblement perpendiculaire à la direction principale de percement P. Ainsi, la vapeur 5 est projeté à l'intérieur du nid 2 après percement de celui-ci par l'organe de percement 31. Selon un exemple, l'organe de percement 31 est configuré pour projeter la vapeur 5 selon plusieurs directions principales de projection. Selon un exemple, l'organe de percement 31 est configuré pour projeter la vapeur 5 selon un secteur angulaire, par exemple selon un secteur angulaire supérieur à 30° et de préférence supérieur ou égal à 90°.

De préférence, l'organe de percement 31 comprend une pluralité d'organes de projection 310. La pluralité d'organes de projection 310 est alors positionnée de façon espacée sur la longueur L de l'organe de percement 31. De manière analogue, la pluralité d'organes de projection 310 est répartie uniformément sur la dimension longitudinale de l'organe de percement 31. La pluralité d'organes de projection 310 peut alors projeter de la vapeur 5 selon plusieurs directions principales de projection, de préférence perpendiculairement à la direction principale de percement P. Ainsi, lors du positionnement du dispositif 30 et une mise route du système de neutralisation 1 on observe une bonne diffusion de la vapeur 5 dans la cloche 32 permettant ainsi une bonne efficacité du dispositif de neutralisation 30.

Selon un exemple, lors du percement du nid 2 par l'organe de percement 31, l'organe de percement 31 peut présenter une portion de sa dimension longitudinale en dehors du nid 2. De ce fait, au moins une partie de la pluralité d'organes de projection 310 peut être dans la cloche 32 sans être dans le nid 2. La vapeur peut alors être diffusée à la fois dans le nid 2 après percement de celui-ci et à la fois dans la cloche 32, ainsi l'efficacité du dispositif 32 est améliorée.

### Interchangeabilité des éléments du dispositif de neutralisation 30 :

Selon un exemple, le dispositif de neutralisation 30 est configuré de sorte à ce que au moins l'un parmi la cloche 32 et l'organe de percement 31 est monté de manière amovible sur l'embase 33. De préférence, la cloche 32 et l'organe de percement 31 sont monté de manière amovible sur l'embase 33. La cloche 32 et l'organe de percement 31 peuvent ainsi être adapté au nid 2 de sorte à permettre une neutralisation efficace des vespidés.

Ainsi, selon un exemple, le système 1 comprend un jeu de cloches 32 présentant des volumes internes 320 différents. La cloche 32 peut ainsi être adaptée en fonction de la taille du nid avant positionnement du système de neutralisation 1. Le jeu de cloche 32 peut alors comprendre au moins une première cloche 32 présentant un volume interne V1 et une deuxième cloche 32 présentant un volume interne V2 tel que V2 > V1.

De manière similaire, le système 1 peut comprendre un jeu d'organe de percement 31 présentant des longueurs L différentes. L'organe de percement 31 peut ainsi être adapté en fonction de la taille du nid avant positionnement du système de neutralisation 1.

Selon un exemple, l'embase 33 est configurée pour être montée de manière amovible sur l'organe de préhension 20. L'organe de préhension 20 peut alors être adapté en fonction de la distance à atteindre pour neutraliser un nid 2. Selon un exemple, le système 1 comprend alors au moins un organe de préhension 20. De préférence, le système 1 comprend un jeu d'organes de préhension 20 de longueurs différentes. L'organe de préhension 20 peut alors être une perche, par exemple une perche télescopique. Le traitement du nid en est facilité et rendu plus efficace. De manière alternative, l'embase 33 est solidaire de l'organe de préhension 20 et forme avec l'organe de préhension 20 une pièce monobloc.

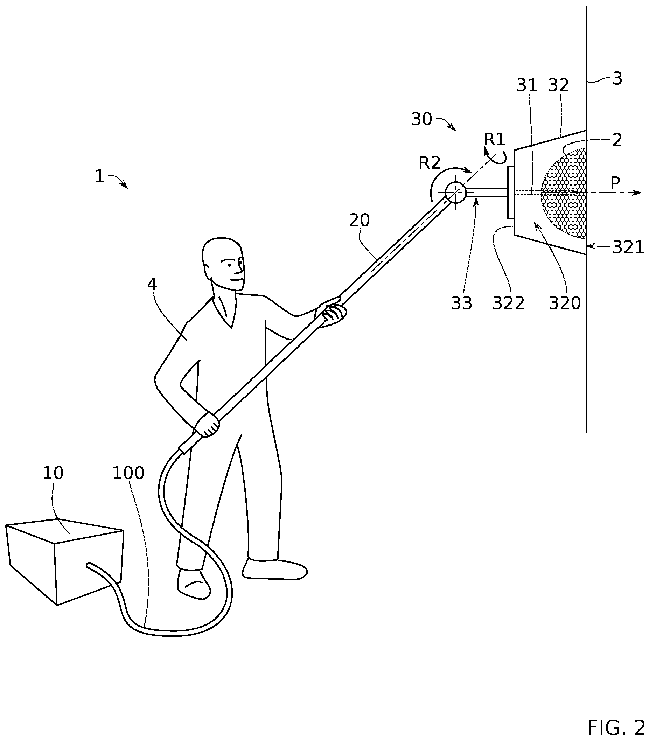

De manière alternative, illustré en figure 2, l'organe de préhension 20 est un tube creux de sorte à intégrer le conduit flexible 100. De manière similaire, l'organe de préhension 20 et le conduit flexible 100 peuvent être un élément unique de sorte à réduire le nombre d'élément du système 1.

### Procédé de neutralisation :

Le système de neutralisation 1 permet une neutralisation efficace de vespidés par l'application d'un procédé de neutralisation d'un nid 2 de vespidés.

Selon un exemple, lors d'au moins une première phase, le procédé comprend une mise en position du dispositif de neutralisation 30 de sorte à loger au moins partiellement et de préférence entièrement le nid 2 dans le volume interne 320 de la cloche 32. Ce positionnement est réalisé en conservant le nid 2 au moins partiellement logé dans le volume interne 320 de la cloche 32.

Selon un exemple, l'au moins première phase comprend, ensuite ou de manière simultanée, un perçage du nid 2 par l'organe de percement 31. Ce perçage est effectué alors que le l'organe de percement 31 et le nid 2 sont logés dans le volume interne 320 de la cloche 32. L'au moins première phase comprend ensuite au moins une injection de vapeur 5 dans le nid 2 par l'au moins un organe de projection 310. Cette injection est effectuée alors que le l'organe de projection 310 et le nid 2 sont logés dans le volume interne 320 de la cloche 32. Les vespidés dans le nid 2 sont alors piégés dans la cloche 32 et grâce à la vapeur 5, chauffent, jusqu'à être neutralisés.

Selon un exemple, le système est configuré de sorte que la cloche 32 englobe totalement le nid avant que l'organe de percement 31 commence à pénétrer dans le nid. Selon un exemple, le système peut être configuré de sorte que le première phase s'effectue entièrement avant la deuxième phase. Par exemple, la cloche 32 est configurée de sorte à englober entièrement le nid avant que l'organe de percement 31 ne commence à percer le nid. Pour cela on peut prévoir une première phase d'avancée du système pour que la cloche vienne prendre appui sur le support puis une deuxième phase, au cours de laquelle l'organe de percement 31 perce le nid. Au cours de cette deuxième phase, on peut prévoir que la cloche 32 se déforme, de préférence élastiquement, de préférence selon une direction d'avancée de l'organe de percement 31. Elle peut par exemple présenter des soufflets pour faciliter cette déformation.

Cela permet de conserver l'intégrité du nid et de ne pas le bouger avant qu'il soit entièrement logé dans la cloche 32. Cela permet de maintenir les vespidés dans le nid ou à proximité du nid le temps de les piéger dans la cloche 32. Ils sont ensuite tous éliminés pour l'injection de fluide.

Selon un exemple, le procédé ne comprend pas d'étape de saisie du nid. En effet, le dispositif de neutralisation 30 n'est pas configuré pour détacher le nid 2 d'un support 3. Le nid 2 n'est pas bougé lors de l'intervention et ainsi cela permet d'éviter une agressivité supplémentaire des vespidés. Le traitement et donc l'utilisation du système 1 est donc plus efficace.

Naturellement, il se peut qu'au cours du traitement le nid soit endommagé, cassé, voire qu'il se détache de sa base, notamment sous l'effet de son poids qui augmente du fait de l'injection de vapeur. Néanmoins, ce détachement du nid n'est pas nécessaire pour mettre en œuvre ce procédé.

Selon un exemple, plusieurs injections de vapeur 5 dans le nid 2 par l'organe de projection 310 sont réalisées lors de la première phase. Cela augmente ainsi l'efficacité de la neutralisation et donc du système de neutralisation 1.

Selon un exemple, le procédé comprend ensuite, après l'au moins une première phase une étape d'enlèvement de la cloche 32. Entre la première phase et une potentielle deuxième phase, la cloche est ainsi de préférence retirée du nid 2.

Selon un exemple, après l'étape d'enlèvement de la cloche 32, l'opérateur 4 peut réaliser un nettoyage de la cloche 32. Le nettoyage de la cloche 32 permet d'enlever les débris de nid 2 qui peuvent être présent. L'enlèvement des débris permet d'éviter par la suite d'avoir des obstacles à un nouveau positionnement de la cloche 32 sur une surface 3. En effet les débris pourraient limiter l'efficacité d'enfermement du nid 2 dans la cloche 32 et donc limiter l'efficacité du système de neutralisation 1. De plus, les débris pourraient entrer en contact avec le nid avant le positionnement de la cloche 32 et donc entrainer la fuite hors du dispositif de neutralisation 30 des vespidés.

Selon un exemple, une réalisation d'au moins une deuxième phase est ensuite réalisée. La deuxième phase est de préférence réalisée après le nettoyage de la cloche 32. La deuxième phase comprenant les mêmes étapes que l'au moins une première phase. La réalisation d'une deuxième phase de neutralisation permet d'assurer la neutralisation des vespidés qui aurait pu être loin du nid 2 lors de la première phase et qui seraient revenus dans ou à proximité du nid après la phase de traitement précédente. Selon un exemple non limitatif, les deux phases sont séparées dans le temps d'une durée supérieure à 5 minutes et de préférence comprise entre 5 et 10 minutes. La deuxième phase peut être réalisée après la première phase, en attendant un intervalle de temps compris entre 5 minutes et 10 minutes. Cela permet ainsi de laisser le temps aux vespidés éloignés du nid 2 de retourner au nid 2 tout en évitant de faire perdre trop de temps à l'opérateur 4.

Selon un exemple, au moins les étapes de la première phase sont effectuées alors que le nid est laissé en place par rapport à une base du nid. Ainsi, le procédé ne comprend pas d'étape de désolidarisation, par arrachage ou par découpe par exemple, du nid par rapport à une base du nid. La base du nid peut également être qualifiée de pied de nid.

L'invention n'est pas limitée aux modes de réalisations précédemment décrits et s'étend à tous les modes de réalisation couverts par l'invention. La présente invention ne se limite pas aux exemples précédemment décrits. Bien d'autres variantes de réalisation sont possibles, par exemple par combinaison de caractéristiques précédemment décrites, sans sortir du cadre de l'invention. En outre, les caractéristiques décrites relativement à un aspect de l'invention peuvent être combinées à un autre aspect de l'invention.

### REFERENCES NUMERIQUES

1 : système de neutralisation
10 : générateur
100 : conduit flexible
20 : organe de préhension
30 : dispositif de neutralisation
31 : organe de percement
310 : organe de projection
32 : cloche
320 : volume interne de cloche
321 : ouverture de passage
3210 : pourtour
322 : fond
323 : parois
33 : embase
2 : nid
3 : surface/support
4 : opérateur
5 : vapeur
R1 : axe de rotation
R2 : axe additionnel de rotation
P : direction principale de percement

## Revendications

1. Système de neutralisation (1) d'un nid (2) d'insectes volants, typiquement des vespidés, de préférence des guêpes et/ou des frelons, par projection de vapeur comprenant un dispositif de neutralisation (30) destiné à être porté par un organe de préhension (20), tel qu'une perche, manipulable par un opérateur (4), le dispositif de neutralisation (30) comprenant un organe de percement (31) configuré pour percer un nid (2) positionné en hauteur et comprenant au moins un organe de projection (310) configuré pour être alimenté en fluide sous pression, de préférence être alimenté en vapeur (5), et projeter le fluide dans au moins une direction,
**caractérisé en ce que** le dispositif de neutralisation (30) comprend une cloche (32) présentant un volume interne (320), l'organe de percement (31) et l'organe de projection (310) de fluide étant situés à l'intérieur du volume interne (320), le dispositif de neutralisation (30) étant configuré de sorte que lorsqu'un nid (2) est logé, en partie au moins dans la cloche (32), l'organe de percement (31) et l'organe de projection (310) puissent pénétrer dans le nid (2).

2. Système (1) selon la revendication précédente dans lequel, la cloche (32) est configurée de sorte à englober au moins partiellement et de préférence entièrement le nid (2).

3. Système (1) selon l'une quelconque des revendications précédentes, configuré de sorte à maintenir l'organe de percement (31) et/ou l'organe de projection (310) à l'intérieur du volume interne (320) de la cloche (32), y compris lors du percement du nid (2) par l'organe de percement (31) et lors de la projection du fluide.

4. Système (1) selon la revendication précédente, comprenant une butée configurée pour empêcher ou limiter le déplacement relatif de l'organe de projection (310) par rapport à la cloche (32), de sorte à maintenir l'organe de projection (310) à l'intérieur du volume interne (320) de la cloche (32).

5. Système (1) selon l'une quelconque des revendications précédentes comprenant un générateur (10) configuré de sorte à produire ledit fluide sous pression, de préférence de la vapeur (5), pour alimenter l'au moins un organe de projection (310) avec ledit fluide sous pression.

6. Système (1) selon l'une quelconque des revendications précédentes dans lequel le dispositif de neutralisation (30) comprend une embase (33) configurée pour être solidaire de l'organe de préhension (20), la cloche (32) étant articulée en rotation sur l'embase (33) selon au moins un axe de rotation (R1), de sorte à pouvoir incliner la cloche (32) selon au moins une direction d'inclinaison.

7. Système (1) selon la revendication précédente, dans lequel l'organe de percement (31) est articulé en rotation sur l'embase (33) selon au moins l'axe de rotation (R1), de sorte à pouvoir incliner l'organe de percement (31) selon au moins une direction d'inclinaison.

8. Système (1) selon l'une quelconque des revendications 6 ou 7 dans lequel la cloche (32) et l'organe de percement (31) sont solidaires en rotation autour dudit axe de rotation (R1), de sorte à pouvoir incliner la cloche (32) et l'organe de percement (31) selon une première direction d'inclinaison.

9. Système (1) selon les revendications 6 et 7 en combinaison, dans lequel au moins l'un parmi la cloche (32) et l'organe de percement (31) est articulé en rotation sur l'embase (33) selon au moins un axe additionnel de rotation (R2), de sorte à pouvoir incliner la cloche (32) selon au moins une deuxième direction d'inclinaison.

10. Système (1) selon l'une quelconque des revendications précédentes dans lequel l'organe de percement (31) s'étend selon une direction principale dite direction principale de percement (P) et une direction d'inclinaison principale est sensiblement perpendiculaire à la direction principale de percement (P).

11. Système (1) selon l'une quelconque des revendications précédentes dans lequel, la cloche (32) présente une ouverture de passage (321) destinée à permettre le passage du nid (2) et un fond (322), l'organe de percement (31) étant situé dans le fond (322), de préférence au droit de ladite ouverture de passage (321), et de préférence dans lequel la cloche (32) présente des parois (323) entièrement fermées à l'exception de ladite ouverture de passage (321).

12. Système (1) selon la revendication précédente dans lequel, l'ouverture de passage (321) définit un pourtour (3210) configuré de sorte à s'appliquer sur une surface (3) pour obturer l'ouverture de passage (321).

13. Système (1) selon la revendication précédente, dans lequel la cloche (32) est configurée pour, au moins au niveau du pourtour (3210), être déformable élastiquement, de préférence de sorte à pouvoir s'adapter à la forme d'un support (3) sur lequel le nid (2) est positionné, et dans lequel la cloche (32) est de préférence en un matériau déformable élastiquement.

14. Système (1) selon l'une quelconque des revendications précédentes comprenant un générateur (10) configuré de sorte à produire ledit fluide sous pression, de préférence de la vapeur (5), pour alimenter l'au moins un organe de projection (310) avec ledit fluide sous pression et dans lequel le générateur (10) comprend un réservoir et une chaudière positionnés de façon déportée, le générateur (10) étant relié à l'organe de projection (310) par l'intermédiaire d'un conduit flexible (100) de sorte à approvisionner en fluide sous pression l'organe de projection (310).

15. Procédé de neutralisation d'un nid de vespidés utilisant le système (1) selon l'une quelconque des revendications précédentes comprenant, au moins une première phase comprenant les étapes suivantes :
• mise en position du dispositif de neutralisation (30) de sorte à loger au moins partiellement et de préférence entièrement le nid (2) dans le volume interne (320) de la cloche (32), et, tout en conservant le nid (2) au moins partiellement logé dans le volume interne (320) de la cloche (32) :
• perçage du nid (2) par l'organe de percement (31),
• au moins une injection de fluide, par exemple de la vapeur (5), à l'intérieur du volume interne (320) de la cloche (32) et dans le nid (2) par l'au moins un organe de projection (310).
